(19)

Europäisches
Patentamt
European
Patent Office
Office européen
des brevets

(11) **EP 4 576 467 A1**

(12) **EUROPEAN PATENT APPLICATION**

(43) Date of publication:
**25.06.2025 Bulletin 2025/26**

(21) Application number: **24155673.7**

(22) Date of filing: **05.02.2024**

(51) International Patent Classification (IPC):
**H02H 7/26** (2006.01)   **H02H 3/46** (2006.01)
**H02H 3/40** (2006.01)   **H02H 1/04** (2006.01)

(52) Cooperative Patent Classification (CPC):
**H02H 3/402; H02H 1/04;** H02H 3/05

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 IN 202341088195**

(71) Applicant: **Hitachi Energy Ltd**
**8050 Zürich (CH)**

(72) Inventors:
• **GEORGE, Neethu**
  **560049 Bangalore (IN)**
• **NAIDU, Obbalareddi Demudu**
  **560087 Bangalore (IN)**
• **PRADHAN, Vedanta**
  **751024 Bhubaneswar (IN)**

(74) Representative: **Vossius & Partner**
**Patentanwälte Rechtsanwälte mbB**
**Siebertstrasse 3**
**81675 München (DE)**

(54) **BLOCKING OR UNBLOCKING OF AT LEAST ONE OF A PLURALITY OF OPERATION ZONES OF A DISTANCE PROTECTION RELAY IN A POWER GRID**

(57)     The present disclosure relates to a method for blocking or unblocking of at least one of a plurality of operation zones of a distance protection relay in a power grid, the method comprising determining a converter protection operation in the power grid, obtaining voltage and current measurements, determining a frequency spectrum of the voltage and current measurements, determining a frequency deviation factor based on the frequency spectrum, determining whether the frequency deviation factor is above a predetermined threshold, and blocking or unblocking of at least one operation zone based on the determination of whether the frequency deviation factor is above a predetermined threshold. The disclosure further relates to a corresponding device and computer-readable medium.

S1 determining a converter protection operation in a power grid

S2 obtaining voltage and current measurements

S3 determining a frequency spectrum of the voltage and current measurements

S4 determining a frequency deviation factor based on the frequency spectrum

S5 determining whether the frequency deviation factor is above a predetermined threshold

S6 blocking or unblocking of at least one operation zone based on the determination of whether the frequency deviation factor is above a predetermined threshold

**Fig. 2**

EP 4 576 467 A1

**Description**

The present disclosure relates to a method, system and computer-readable medium for blocking or unblocking of at least one of a plurality of operation zones of a distance protection relay in a power grid.

Distance relay is faced with numerous issues due to the proliferation of renewable resources, which have different fault characteristics when compared to synchronous machines [1]. These characteristics are determined primarily by the controls, grid code and fault ride through (FRT) requirements. Doubly fed induction generator-based resources (such as Type III wind farms) pose a peculiar challenge to existing phasor-based distance protection during its converter protection operation, e.g., a crowbar operation. Crowbar operation is a converter protection scheme where it bypasses the rotor-side converter during severe faults causing the generator to act like a squirrel cage induction generator (SCIG). In this scenario, for a balanced fault, the frequency of the fault current supplied by the SCIG changes to an off-nominal value while that of the voltage remains at the nominal value. Due to this, the distance protection which operates based on a ratio of these voltage and current phasors, which are now at different frequencies, maloperates. The same problems may occur during other converter protection schemes.

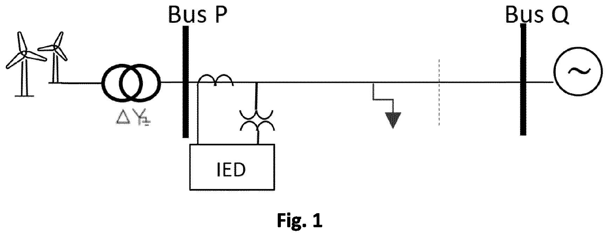

As described above, crowbar operation due to a severe balanced fault causes the frequency of current output from the generator to vary to an off-nominal value, depending on the slip of the machine and wind speed [8]. This can cause maloperation of existing phasor-based distance relay as shown in the illustrative Fig. 1. Therein, a renewable energy source (in this case depicted as a wind farm) is connected to a transmission line via bus P to bus Q. An Intelligent Electronic Device (IED) is connected to the transmission line. The location of the fault is exemplarily indicated by the stepped arrow.

Bus P may be denoted as the local bus and bus Q may be denoted as the remote bus. The IED may be provided at the local bus P. The protected line is the line between the local bus P and the remote bus Q. Measuring points may be provided between bus P and bus Q, i.e., on the protected line.

In that case, existing phasor-based distance protection (implemented within IED at the terminal local to the wind farm, i.e., bus P) for a solid three phase fault at remote bus Q of the line PQ in Fig. 1 may not correctly indicate the fault.

In the present example, the current frequency deviates to ca. 59 Hz (off-nominal frequency) while the voltage frequency remains at 50 Hz (nominal frequency). For the IED at bus P, this is an out-of-zone fault. The apparent impedance calculated by the existing phasor-based distance protection oscillates and enters the trip boundary for the out-of-zone fault (see below for zone definition), compromising security of protection. This is attributed to the spectral scatter in the voltage and current signals, i.e., voltage and current having different dominant frequencies. A phasor estimation, which is typically done at the fundamental system frequency, can in such cases lead to oscillatory phasors.

Several new distance protection methods for lines connected to inverter-based resources have been proposed in the existing literature [2]-[5]. However, the problem of frequency deviations and its impact on the phasor-based approaches are not discussed. All these solution approaches are phasor-based and hence will be negatively impacted by the frequency deviations during crowbar operation in Type III based wind farms.

The performance of distance relay specifically for lines connected to Type III wind farms is discussed in [6,7]. The frequency deviation problem during crowbar operation and maloperation of distance relay is discussed. However, the solution approach recommended is based on modified transfer schemes which is dependent on communication between local and remote location relays. Distance protection for lines connected to Type III wind farms is also discussed in [8]. However, the work focusses on solving the challenge of increased system non-homogeneity through phase angle correction methods and does not solve the problems introduced due to frequency deviations. A wavelet-based protection scheme that relies on an artificial neural network for zone determination for distance protection of lines connected to DFIG-based wind farms is proposed in [9]. However, the requirement of large training set and the solution not being universal for various control strategies and Grid Codes is a disadvantage.

Several references discuss detection of subsynchronous oscillation events and remedial actions for the same in power transmission systems. US 9 806 690 B1 (reference[10]) discusses a protection algorithm that uses quantities of both the subsynchronous oscillation component and the fundamental frequency component of the monitored signal as an operational quantity to detect oscillations. Further, protection protocol includes disconnection of the component causing such oscillations, including bypassing a capacitor bank of a series-compensated transmission line or disconnecting an associated wind generator from an associated transmission grid. However, disconnection of the wind generator upon a fault is undesirable since it means unnecessary curtailment of clean energy, and can lead to lower available generation, further cascaded events and even stability issues.

Reference [11] discusses transient reach problems in distance protection due to subsynchronous oscillations (SSO). Digital high-pass filter is proposed to filter low-frequency signals and damp spiralling impedance oscillation during SSO phenomenon. However, this solution is not apt for the above-described frequency deviation problem in renewable energy, in particular Type III, generators, since the deviated frequency can be higher than the nominal frequency also. It can be as high as 10-15 Hz greater than the nominal frequency [6].

Frequency of voltage and current signals are deviated from the nominal value due to peculiar behaviour of the inverter based renewable resources, especially during system faults. Therefore, there is a requirement to block or unblock or delay certain operation zones of the distance protection to avoid superfluous trips.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method for blocking or unblocking of at least one of a plurality of operation zones of a distance protection relay in a power grid, the method comprising determining a converter protection operation in the power grid, obtaining voltage and current measurements, determining a frequency spectrum of the voltage and current measurements, determining a frequency deviation factor based on the frequency spectrum, determining whether the frequency deviation factor is above a predetermined threshold, and blocking or unblocking of at least one operation zone based on the determination of whether the frequency deviation factor is above a predetermined threshold.

Various embodiments may preferably implement the following features.

Preferably, the method further comprises determining an off-nominal frequency in the frequency spectrum of the current measurements and/or the voltage measurements.

Preferably, the determination of the frequency deviation factor is performed based on the off-nominal frequency.

Preferably, the frequency deviation factor is determined based on a current at a nominal frequency and a current at the off-nominal frequency.

Preferably, the determination is based on a division operation.

Preferably, the nominal frequency is a normal operation frequency of the power grid.

Preferably, the frequency deviation factor is determined based on a voltage at a nominal frequency and a voltage at the off-nominal frequency.

Preferably, the determination is based on a division operation.

Preferably, the nominal frequency is a normal operation frequency of the power grid.

Preferably, the threshold is between 0.1 and 0.6, preferably between 0.2 and 0.5.

Preferably, the determination of the converter protection operation is performed based on the frequency spectrum of the voltage and current measurements.

Preferably, the converter protection operation is a crowbar operation.

Preferably, the power grid comprises a wind farm, preferably a renewable energy source and/or a power electric based power source, and further preferably a type III wind farm.

The present disclosure further relates to a device for blocking or unblocking of at least one of a plurality of operation zones of a distance protection relay in a power grid comprising a processor configured to determine a converter protection operation in the power grid, obtain voltage and current measurements, determine a frequency spectrum of the voltage and current measurements, determine a frequency deviation factor based on the frequency spectrum, determine whether the frequency deviation factor is above a predetermined threshold, and block or unblock of at least one operation zone based on the determination of whether the frequency deviation factor is above a predetermined threshold.

Various embodiments may preferably implement the following features.

Preferably, the processor is further configured to determine an off-nominal frequency in the frequency spectrum of the current measurements and/or the voltage measurements.

Preferably, the processor is configured to determine the frequency deviation factor based on the off-nominal frequency.

Preferably, the processor is configured to determine the frequency deviation factor based on a current at a nominal frequency and a current at the off-nominal frequency.

Preferably, the determination is based on a division operation.

Preferably, the processor is configured to determine the frequency deviation factor based on a voltage at a nominal frequency and a voltage at the off-nominal frequency.

Preferably, the determination is based on a division operation.

Preferably, the nominal frequency is a normal operation frequency of the power grid.

Preferably, the threshold is between 0.1 and 0.6, preferably between 0.2 and 0.5.

Preferably, the device is an Intelligent Electronic Device, IED.

Preferably, the device is connected to the power grid.

The present disclosure further relates to a computer-readable storage medium comprising instructions which, when executed by a processor, configure the processor to perform the method as outlined above.

The present disclosure is further described with reference to the figures, wherein the same reference numbers denote the same or similar elements.

Fig. 1   shows a transmission line according to an embodiment of the present disclosure.

Fig. 2   shows a flow chart according to an embodiment of the present disclosure.

Fig. 3   shows a flow chart according to an embodiment of the present disclosure.

As used herein, the term nominal voltage may refer to a standard common frequency of both voltage and current signals during nominal (normal) operation of the grid. This may be, e.g., 50 Hz in a European or Indian power grid and 60 Hz in a US power grid.

Distance protection may use grading type of tripping characteristic. The zone and time grading (i.e., delayed) set-up provide protection of the power line between bus P and bus Q through zone 1 and the adjacent line, i.e., a line connected after bus Q, through zones 2 and 3. The impedance reach of each zone may be set with a certain overreach and underreach with respect to the protected line. This is done because of the measurement errors of distance protection which can be caused by at least one of the following factors: calculation algorithm, accuracy of power line parameters, accuracy of voltage and current transformers, accuracy of protection (A/D converter), impact of parallel lines, type of fault, or actual topology of the power system.

In the present disclosure, the operation zones are defined as follows for illustrative purposes. Therein, the percentage ranges refer to the total protected line length, i.e., the distance between bus P and bus Q. The starting point of the percentage is the location of the IED/bus P (cf. Fig. 1). That is, 80% of the protected line denotes the distance from bus P to 0.8 L, wherein L is the total line length between bus P and bus Q.

A distance relay may cover five zones. However, this may be adapted according to user requirements and another number of zones, e.g., three, may be used.

Zone 1 may cover 70-90%, preferably 80% of the protected line of concern. It may operate instantaneously. That is, zone 1 may cover 70-90% of the protected line starting at bus P towards bus Q.

For faults closer to bus Q, protection is accomplished by adding a zone 2 distance protection.

Zone 2 may cover 120-150% of the protected line. I.e., zone 2 may cover the complete line length between bus P and bus Q plus 20-50 % of the next line length starting at bus Q. Zone 2 serves as protection beyond the zone 1 reach and provides backup protection for the part of the outgoing lines from bus Q.

It may operate with a certain delay. The delay may be called Zone-2 coordination time interval (or CTI). Typically, Zone-2 CTI is 10-30 cycles, preferably 20 cycles or 400 ms for a 50 Hz power system.

Thus, for faults along the segment P-Q and closer to bus Q, the zone 2 distance protection will isolate the fault with a delay of, e.g., 400 ms to 500 ms, depending on the CTI. However, from the perspective of the zone 1 distance protection, the fault falls on its zone 1 distance protection and isolation is done with no intentional time delay.

To provide back-up protection for complete outgoing power line from bus Q, a third zone of distance protection may be configured. Impedance reach of zone 3 is set to cover the entire length of the power line between bus P and bus Q as well as the line length between bus Q and the next bus.

Zone 3 may cover 120% of the protected line plus the adjoining line. It may operate with a Zone-3 CTI delay of 40-60 cycles, preferably 50 cycles or 1000 ms for a 50 Hz power system.

Similarly, Zones 4 and 5 cover larger lengths and operate with higher CTIs. Zone-5 may generally cover reverse faults.

Exemplary reference is also made to https://pacbasics.org/fundamentals-of-distance-protection/.

Zone-1 may be referred to as a main protection for the line of concern while other zones provide the back protection for an adjacent network in both directions.

Parameters considered for the operation zones may comprise an impedance of the protection lines, resistive and reactive reach of each zone.

Boundaries of the operation zones may be dependent on the protected line length, impedances of the lines, adjacent networks (line length and related impedances), etc.

The zone definitions translate to time graded operating characteristics of the distance relay.

For example, impedance measured by distance relay entering zone-1 characteristic results in instantaneous tripping of the relay. If circuit breakers fail or relay itself failed in zone-1 tripping then zone-2 of the adjacent line clears the fault with a stipulated time delay.

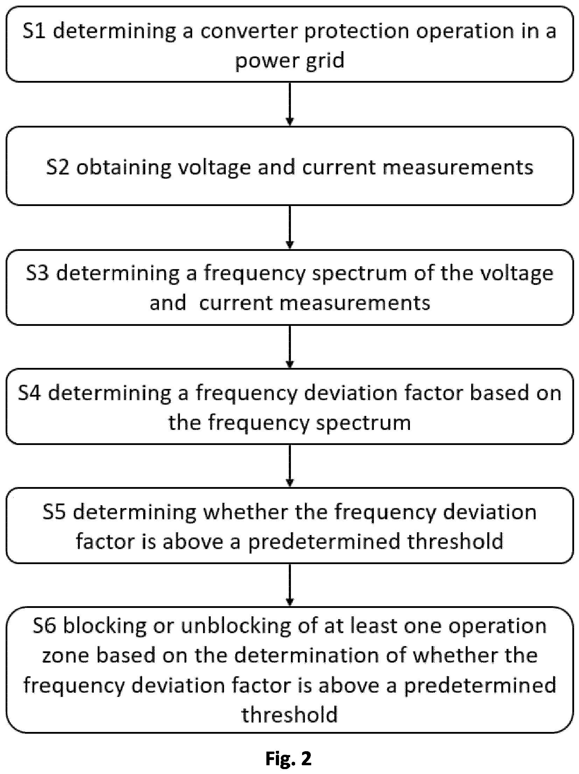

Fig. 2 is a flow chart of a method according to an embodiment. The method comprises determining S1 a converter protection operation in the power grid, obtaining S2 voltage and current measurements, determining S3 a frequency spectrum of the voltage and current measurements, determining S4 a frequency deviation factor based on the frequency spectrum, determining S5 whether the frequency deviation factor is above a predetermined threshold and blocking or unblocking S6 of at least one operation zone based on the determination of whether the frequency deviation factor is above a predetermined threshold.

Obtaining voltage and current measurements in step S2 may be performed at a local bus. The local bus herein denotes the bus to which the renewable energy source is connected. Alternatively, they may be obtained at a remote bus or both of the busses. However, the voltage and current measurements may also be obtained at at least one reference point on the line. Also, voltage and current may be measured at multiple points on the line.

The method may further comprise determining an off-nominal frequency in the frequency spectrum of the current measurements and/or the voltage measurements. An off-nominal frequency may denote a frequency deviating from a nominal frequency, i.e., a normal operation frequency. In power grids, the nominal frequency may, e.g., be 50 Hz or 60 Hz, depending on the location.

The determination of the frequency deviation

factor $\delta_f$ may be performed based on the off-nominal frequency.

In particular, the frequency deviation factor $\delta_f^I$ may be determined based on a current at a nominal frequency and a current at the off-nominal frequency. The determination may be based on a division operation.

$$\delta_f^I = \frac{|I_{fdI}|}{|I_{f0}|}$$

Thus, , wherein $f_0$ denotes the nominal system frequency and $f_{dI}$ indicates the off-nominal frequency observed in the current.

Also, the frequency deviation factor may be determined based on a voltage at a nominal frequency and a voltage at the off-nominal frequency. The determination may be based on a division operation.

$$\delta_f^V = \frac{|V_{fdV}|}{|V_{f0}|}$$

Thus, , wherein $f_0$ denotes the nominal system frequency and $f_{dv}$ indicates the off-nominal frequency observed in the voltage.

For both the current and voltage measurements, a threshold parameter $\varphi_I$ and $\varphi_V$, respectively, may be set. The threshold may be between 0.1 and 0.6, preferably between 0.2 and 0.5.

Thus, blocking and unblocking is performed based on the assessment whether $\delta_f^I > \varphi_I$ and/or $\delta_f^V > \varphi_V$.

The determination of the converter protection operation may be performed based on the frequency spectrum of the voltage and current measurements. The converter protection operation may be a crowbar operation or another kind of converter protection.

The power grid may comprise a wind farm, preferably a renewable energy source and/or a power electric based power source. The wind farm may, e.g., be a type III wind farm.

The present disclosure further relates to a device for blocking or unblocking of at least one of a plurality of operation zones of a distance protection relay in a power grid comprising a processor configured to perform the method as described above.

In an embodiment, the processor is configured to determine a converter protection operation in the power grid, obtain voltage and current measurements, determine a frequency spectrum of the voltage and current measurements, determine a frequency deviation factor based on the frequency spectrum, determine whether the frequency deviation factor is above a predetermined threshold, and block or unblock of at least one operation zone based on the determination of whether the frequency deviation factor is above a predetermined threshold.

In an embodiment, the processor is further configured to determine an off-nominal frequency in the frequency spectrum of the current measurements and/or the voltage measurements. In an embodiment, the processor is configured to determine the frequency deviation factor based on the off-nominal frequency. In an embodiment, the processor is configured to determine the frequency deviation factor based on a current at a nominal frequency and a current at the off-nominal frequency. In an embodiment, the determination is based on a division operation. In an embodiment, the processor is configured to determine the frequency deviation factor based on a voltage at a nominal frequency and a voltage at the off-nominal frequency. In an embodiment, the determination is based on a division operation. In an embodiment, the nominal frequency is a normal operation frequency of the power grid. In an embodiment, the threshold is between 0.1 and 0.6, preferably between 0.2 and 0.5. In an embodiment, the device is an Intelligent Electronic Device, IED. In an embodiment, the device is connected to the power grid.

The disclosure also relates to a corresponding computer-readable medium. The computer-readable medium comprises instructions which, when executed by a processor, configure the processor to perform the method as described herein.

To further elaborate on the above-described method, device and computer-readable medium, the present disclosure describes a methodology to prevent maloperation of the existing phasor-based distance protection during generation protection operation, in this example a crowbar operation, for lines connected to renewable energy sources, in the present example Type III wind turbine generator-based plants.

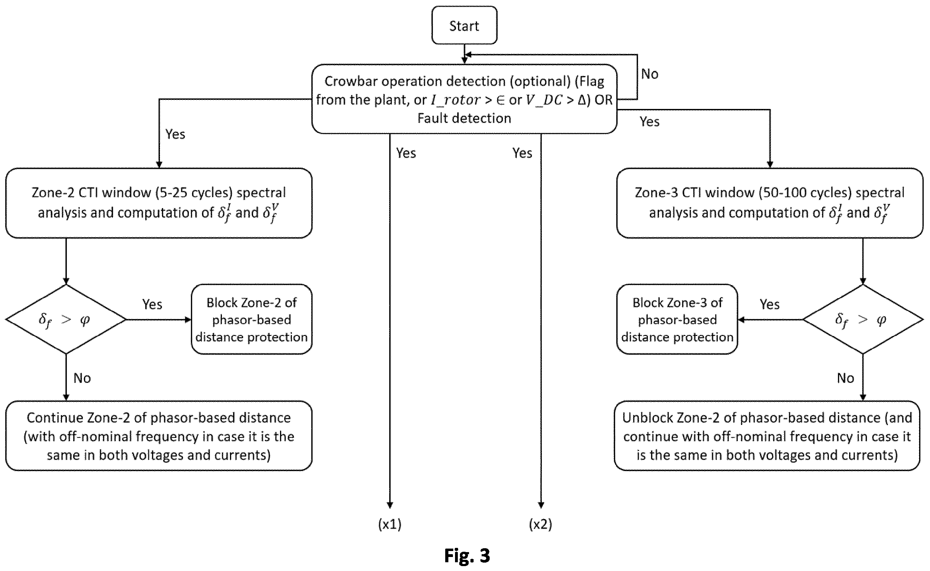

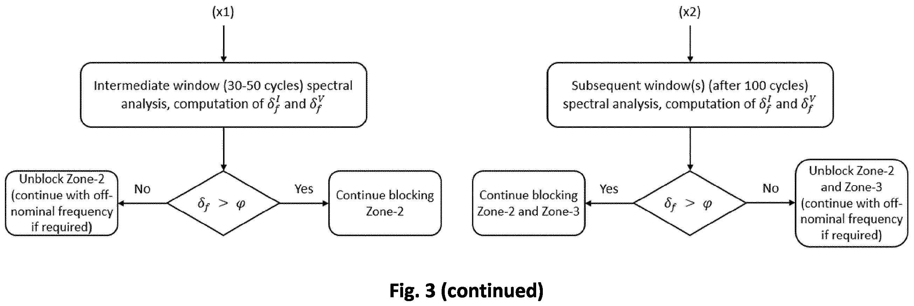

The flowchart of the embodiment of Fig. 3 depicts respective steps. The first step is a converter protection operation/crowbar operation detection element to trigger further steps. This can be a crowbar operation flag which is acquired from the plant, if available. Alternatively, the DC link voltage or rotor current measurements from the wind turbine generator can also be monitored and compared against a pre-set threshold to determine a probable crowbar operation. However, this is an optional step because such measurements/signals may or not be made available at the relay location in practice. If such direct detection of crowbar operation is not possible, then the subsequent steps may be triggered based on the fault/event detection logic of the relay.

The next step is a spectral analysis to determine the extent of frequency deviation in the current and voltage signals. For both the signals, a frequency deviation factor can be calculated as the ratio of the magnitude of the signal at off-nominal frequency to the magnitude of the signal at the fundamental frequency (see above). If it is greater than a preset threshold, i.e., $\delta_f^I > \varphi_I$ and/or $\delta_f^V > \varphi_V$ (abbreviated by $\delta_f > \varphi$), it means that there is significant frequency deviation (from the nominal frequency) in the current signal. This indicates that the apparent impedance calculations by the phasor-based distance protection will be inaccurate, and it needs to be blocked. This is again mathematically represented in the following (see also above).

If for the frequency deviation factor $\delta_f$ it is valid that $\delta_f > \varphi$, this implies that either or both conditions (a), (b) are satisfied.

$$\delta_f^I = \frac{|I_{fdI}|}{|I_{fo}|} > \varphi_I$$

(a) , meaning there is a significant amplitude of the current at an off-nominal frequency with respect to the amplitude at the nominal system frequency in one or more phases (when considering a three-phase system).

$$\delta_f^V = \frac{|V_{fdV}|}{|V_{fo}|} > \varphi_V$$

(b) , meaning there is a significant amplitude of the voltage at an off-nominal frequency with respect to the amplitude at the nominal system frequency in one or more phases (when considering a three-phase system).

In the case that the frequency deviation factors are roughly the same, i.e., $\delta_{fI} \approx \delta_{fV}$, two options may be considered. A phasor-based relay operation may be blocked or the phasor-based relay operation may be changed to the new frequency $f_{dI}$. As outlined above, the values for $\varphi_I$ and $\varphi_V$, respectively, may be set to be between 0.1 and 0.6, preferably between 0.2 and 0.5.

It may be important to consider blocking of the phasor-based relay in a hierarchical manner without interfering significantly with its normal operation. To achieve this, the present disclosure proposes a time-divided algorithm for implementing the blocking/unblocking of the higher zones (i.e., upwards of Zone-2). The flowchart of Fig. 3 depicts the same for a relay considering only 3 zones of relay operation. The same principle can be extended further if there are more zones. The blocking of Zone-2 can be decided based on a spectral analysis and (the related steps as described earlier) in the Z2 CTI window (e.g., 5-25 cycles assuming 25 cycles as the Zone-2 coordination time interval) after the fault detection. If the condition on frequency deviation factor is satisfied, then Zone-2 is blocked. A similar check and blocking of Zone-3 can be implemented in the Z3 CTI window (e.g., 50-100 cycles assuming 100 cycles as the Zone-3 coordination time interval). Note that coordination time intervals (CTIs) for different zones can be obtained from the relay settings. An intermediate window (e.g., 30-50 cycles) may be analysed and Zone-2 can be unblocked if the condition on frequency deviation factor is not satisfied. This is important because the crowbar might be taken out of operation after a few cycles following the fault and it may no longer be required to keep Zone-2 blocked. Spectral analyses may be continued for subsequent windows if Zone-3 is blocked to unblock all the blocked zones if the system frequency is restored in both voltages and currents.

According to the present disclosure, an intelligent logic using spectral analysis over strategic time windows following a converter protection operation to block and further release block on Zone-2 and higher operating zones of the distance protection is presented.

The protection operation, e.g., a crowbar operation, is detected based on a frequency spectrum of voltage and current signals

It is based only on local voltage and current measurements available at the relay terminal. No communication with the remote end relay is required. Hence it is not prone to failures associated with communication latencies and/or loss of communication.

The proposed method does not require any information related to the IBR control strategy and/or parameters, which are generally proprietary and not readily shared by the manufacturers.

Existing phasor-based distance protection faces challenges when applied to lines connected to renewable energy sources, e.g., Type III-based wind farms. During severe faults, (crowbar) protection in Type III generators operate, causing the frequency of the current output to vary from the off-nominal value, depending on the slip of the machine and the wind speed at the time of fault. The present disclosure presents a methodology to prevent maloperation of the existing phasor-based distance protection during crowbar operation for lines connected to Type III wind turbine generator-based plants. It detects a protection operation, identifies the frequency spectra in voltage and current measurements, checks the presence of significant off-nominal frequencies in the signals beyond a safe threshold and blocks/unblocks higher zones of the existing phasor-based distance protection.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

List of cited references

[1] A. Hooshyar, M. A. Azzouz, and E. F. El-Saadany, "Distance protection of lines emanating from full-scale converter-interfaced renewable energy power plants; part I: Problem statement," IEEE Trans. Power Del., vol. 30, no. 4, pp. 1770-1780, Aug 2015

[2] A. Hooshyar, M. A. Azzouz and E. F. El-Saadany, "Distance protection of lines emanating from full-scale converter-interfaced renewable energy power plants-Part II: Solution description and evaluation", IEEE Trans. Power Del., vol. 30, no. 4, pp. 1781-1791, Aug. 2015

[3] H. Sadeghi, "A novel method for adaptive distance protection of transmission line connected to wind farms", Int. J. Elect. Power Energy Syst., vol. 43, no. 1, pp. 1376-1382, Dec. 2012

[4] Y. Liang, W. Li, Z. Lu, G. Xu and C. Wang, "A new distance protection scheme based on improved virtual measured voltage", IEEE Trans. Power Del., vol. 35, no. 2, pp. 774-786, Apr. 2020.

[5] S. Paladhi and A. K. Pradhan, "Adaptive Distance Protection for Lines Connecting Converter-Interfaced Renewable Plants," IEEE Journal of Emerging and Selected Topics in Power Electronics, vol. 9, no. 6, pp. 7088-7098

[6] A. Hooshyar, M. A. Azzouz, and E. F. El-Saadany, "Distance protection of lines connected to induction generator-based wind farms during balanced faults," IEEE Tra ns. Sustainable Energy, vol. 5, no. 4, pp.1193-1203, Oct 2014"

[7] X. Zhang and S. P. Azad, "A Modified PUTT Scheme for Transmission Lines Connecting DFIG-Based Wind Farm," 2021 IEEE Power & Energy Society General Meeting (PESGM), Washington, DC, USA, 2021, pp. 1-5

[8] Xu Li, Yuping Lu, Tao Huang, Jiaqi Qin, Wentao Jiang, "Superimposed components-based distance protection of lines emanating from DFIG-based wind farms", Electric Power Systems Research, Volume 208, 2022, 107916, ISSN 0378-7796

[9] A. Alrashdan, E. A. Feilat and M. A. Haj-Ahmed, "Protection of Transmission Lines Emanating from DFIG-Based Wind Farms During Symmetrical Faults," 2021 IEEE Industry Applications Society Annual Meeting (IAS), Vancouver, BC, Canada, 2021, pp. 1-6

[10] US9806690B1," Subsynchronous oscillation relay", AEP Transmission Holding Co LLC, Granted on 31 October, 2017

[11] "The impacts of series compensated EHV lines on distance protection, and a proposed new mitigation solution", Degree Project in Electrotechnical Theory and Design, KTH Royal Institute of Technology, Stockholm 2017

[12] US-20230094978-A1," DETECTING AN ELECTRICAL FAULT WITHIN A MONITORED ZONE OF A POWER TRANSMISSION LINE", Published on 30 March, 2023

**Claims**

1. Method for blocking or unblocking of at least one of a plurality of operation zones of a distance protection relay in a power grid, the method comprising:

   determining (S1) a converter protection operation in the power grid,
   obtaining (S2) voltage and current measurements,
   determining (S3) a frequency spectrum of the voltage and current measurements,
   determining (S4) a frequency deviation factor based on the frequency spectrum,
   determining (S5) whether the frequency deviation factor is above a predetermined threshold, and
   blocking or unblocking (S6) of at least one operation zone based on the determination of whether the frequency deviation factor is above a predetermined threshold.

2. Method according to claim 1, wherein the method further comprises determining an off-nominal frequency in the frequency spectrum of the current measurements and/or the voltage measurements.

3. Method according to claim 2, wherein the determination of the frequency deviation factor is performed based on the off-nominal frequency.

4. Method according to claim 2 or 3, wherein the frequency deviation factor is determined based on a current at a nominal frequency and a current at the off-nominal frequency,

   wherein preferably, the determination is based on a division operation, and/or

wherein preferably, the nominal frequency is a normal operation frequency of the power grid.

5. Method according to any one of claims 2 to 4, wherein the frequency deviation factor is determined based on a voltage at a nominal frequency and a voltage at the off-nominal frequency,

    wherein preferably, the determination is based on a division operation, and/or
    wherein preferably, the nominal frequency is a normal operation frequency of the power grid.

6. Method according to any one of claims 1 to 5, wherein the threshold is between 0.1 and 0.6, preferably between 0.2 and 0.5.

7. Method according to any one of claims 1 to 6, wherein the determination of the converter protection operation is performed based on the frequency spectrum of the voltage and current measurements, and/or
wherein the converter protection operation is a crowbar operation.

8. Method according to any one of claims 1 to 7, wherein the power grid comprises a wind farm, preferably a renewable energy source and/or a power electric based power source, and further preferably a type III wind farm.

9. Device for blocking or unblocking of at least one of a plurality of operation zones of a distance protection relay in a power grid comprising a processor configured to:

    determine a converter protection operation in the power grid,
    obtain voltage and current measurements,
    determine a frequency spectrum of the voltage and current measurements,
    determine a frequency deviation factor based on the frequency spectrum,
    determine whether the frequency deviation factor is above a predetermined threshold, and
    block or unblock of at least one operation zone based on the determination of whether the frequency deviation factor is above a predetermined threshold.

10. Device according to claim 9, wherein the processor is further configured to determine an off-nominal frequency in the frequency spectrum of the current measurements and/or the voltage measurements.

11. Device according to claim 10, wherein the processor is configured to determine the frequency deviation factor based on the off-nominal frequency.

12. Device according to claim 10 or 11, wherein the processor is configured to determine the frequency deviation factor based on a current at a nominal frequency and a current at the off-nominal frequency,

    wherein preferably, the determination is based on a division operation, and/or
    wherein the processor is configured to determine the frequency deviation factor based on a voltage at a nominal frequency and a voltage at the off-nominal frequency,
    wherein preferably, the determination is based on a division operation, and/or
    wherein preferably, the nominal frequency is a normal operation frequency of the power grid.

13. Device according to any one of claims 9 to 12, wherein the threshold is between 0.1 and 0.6, preferably between 0.2 and 0.5.

14. Device according to any one of claims 9 to 13, wherein the device is an Intelligent Electronic Device, IED, and/or
wherein the device is connected to the power grid.

15. Computer-readable storage medium comprising instructions which, when executed by a processor, configure the processor to perform the method according to any one of claims 1 to 8.

**Fig. 1**

S1 determining a converter protection operation in a power grid

↓

S2 obtaining voltage and current measurements

↓

S3 determining a frequency spectrum of the voltage and current measurements

↓

S4 determining a frequency deviation factor based on the frequency spectrum

↓

S5 determining whether the frequency deviation factor is above a predetermined threshold

↓

S6 blocking or unblocking of at least one operation zone based on the determination of whether the frequency deviation factor is above a predetermined threshold

**Fig. 2**

Start

Crowbar operation detection (optional) (Flag from the plant, or $I\_rotor > \in$ or $V\_DC > \Delta$) OR Fault detection

No → Yes

Yes → (x1)

Yes → (x2)

**Zone-3 branch:**

Zone-3 CTI window (50-100 cycles) spectral analysis and computation of $\delta_f^I$ and $\delta_f^V$

$\delta_f > \varphi$

Yes → Block Zone-3 of phasor-based distance protection

No → Unblock Zone-2 of phasor-based distance (and continue with off-nominal frequency in case it is the same in both voltages and currents)

**Zone-2 branch:**

Zone-2 CTI window (5-25 cycles) spectral analysis and computation of $\delta_f^I$ and $\delta_f^V$

$\delta_f > \varphi$

Yes → Block Zone-2 of phasor-based distance protection

No → Continue Zone-2 of phasor-based distance (with off-nominal frequency in case it is the same in both voltages and currents)

**Fig. 3**

(x1)

Intermediate window (30-50 cycles) spectral analysis, computation of $\delta_f^I$ and $\delta_f^V$

Unblock Zone-2 (continue with off-nominal frequency if required)

No ← $\delta_f > \varphi$ → Yes

Continue blocking Zone-2

(x2)

Subsequent window(s) (after 100 cycles) spectral analysis, computation of $\delta_f^I$ and $\delta_f^V$

Continue blocking Zone-2 and Zone-3 ← Yes $\delta_f > \varphi$ No → Unblock Zone-2 and Zone-3 (continue with off-nominal frequency if required)

**Fig. 3 (continued)**

Europäisches
Patentamt

European
Patent Office

Office européen
des brevets

# EUROPEAN SEARCH REPORT

**Application Number**

EP 24 15 5673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ZHANG XIAOYOU ET AL: "A Modified PUTT Scheme for Transmission Lines Connecting DFIG-Based Wind Farm", 2021 IEEE POWER & ENERGY SOCIETY GENERAL MEETING (PESGM), IEEE, 26 July 2021 (2021-07-26), pages 1-5, XP034053440, DOI: 10.1109/PESGM46819.2021.9638208 [retrieved on 2021-12-03] * the whole document * | 1-15 | INV. H02H7/26 H02H3/46 H02H3/40 H02H1/04 |
| X | ZHANG XIAOYOU ET AL: "Modified distance protection of transmission lines originating from DFIG-based WPPs by considering the impact of fault-induced rotor frequency and LVRT requirements", INTERNATIONAL JOURNAL OF ELECTRICAL POWER & ENERGY SYSTEMS, JORDAN HILL, OXFORD, GB, vol. 147, 22 December 2022 (2022-12-22), XP087246863, ISSN: 0142-0615, DOI: 10.1016/J.IJEPES.2022.108911 [retrieved on 2022-12-22] * abstract; figure 14 * * Sections: 1.Introduction;3.1; 3.3;4.3 * | 1-15 | |
| Y | NAIDU O D ET AL: "Distance Protection for Lines Connected with Type III Wind Farms: Problems and Solution", 2023 IEEE PES 15TH ASIA-PACIFIC POWER AND ENERGY ENGINEERING CONFERENCE (APPEEC), IEEE, 6 December 2023 (2023-12-06), pages 1-6, XP034623030, DOI: 10.1109/APPEEC57400.2023.10561995 [retrieved on 2024-06-20] * abstract * * Section II * | 1-15 | **TECHNICAL FIELDS SEARCHED (IPC)** H02H |

-/--

The present search report has been drawn up for all claims

| Place of search | Date of completion of the search | Examiner |
|---|---|---|
| Munich | 11 July 2024 | Palukova, Mila |

page 1 of 2

Europäisches
Patentamt

European
Patent Office

Office européen
des brevets

# EUROPEAN SEARCH REPORT

**Application Number**

EP 24 15 5673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MOORE P J ET AL: "NEW METHOD OF POWER SWING BLOCKING FOR DIGITAL DISTANCE PROTECTION", IEE PROCEEDINGS: GENERATION, TRANSMISSION AND DISTRIBUTION, INSTITUTION OF ELECTRICAL ENGINEERS, GB, vol. 143, no. 1, 1 January 1996 (1996-01-01), pages 19-26, XP000555051, ISSN: 1350-2360, DOI: 10.1049/IP-GTD:19960055 * abstract * * Section II * * Section: Introduction * ----- | 1-15 | |

TECHNICAL FIELDS
SEARCHED     (IPC)

The present search report has been drawn up for all claims

| Place of search | Date of completion of the search | Examiner |
|---|---|---|
| Munich | 11 July 2024 | Palukova, Mila |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9806690 B1

- US 20230094978 A1

### Non-patent literature cited in the description

- **A. HOOSHYAR** ; **M. A. AZZOUZ** ; **E. F. EI-SAADANY**. Distance protection of lines emanating from full-scale converter-interfaced renewable energy power plants; part I: Problem statement. *IEEE Trans. Power Del.*, August 2015, vol. 30 (4), 1770-1780

- **A. HOOSHYAR** ; **M. A. AZZOUZ** ; **E. F. EI-SAADANY**. Distance protection of lines emanating from full-scale converter-interfaced renewable energy power plants-Part II: Solution description and evaluation. *IEEE Trans. Power Del*, August 2015, vol. 30 (4), 1781-1791

- **H. SADEGHI**. A novel method for adaptive distance protection of transmission line connected to wind farms. *Int. J. Elect. Power Energy Syst*, December 2012, vol. 43 (1), 1376-1382

- **Y. LIANG** ; **W. LI** ; **Z. LU** ; **G. XU** ; **C. WANG**. A new distance protection scheme based on improved virtual measured voltage. *IEEE Trans. Power Del.*, April 2020, vol. 35 (2), 774-786

- **S. PALADHI** ; **A. K. PRADHAN**. Adaptive Distance Protection for Lines Connecting Converter-Interfaced Renewable Plants. *IEEE Journal of Emerging and Selected Topics in Power Electronics*, vol. 9 (6), 7088-7098

- **A. HOOSHYAR** ; **M. A. AZZOUZ** ; **E. F. EI-SAADANY**. Distance protection of lines connected to induction generator-based wind farms during balanced faults. *IEEE Tra ns. Sustainable Energy*, October 2014, vol. 5 (4), 1193-1203

- **X. ZHANG** ; **S. P. AZAD**. A Modified PUTT Scheme for Transmission Lines Connecting DFIG-Based Wind Farm. *2021 IEEE Power & Energy Society General Meeting (PESGM), Washington, DC, USA*, 2021, 1-5

- **XU LI** ; **YUPING LU** ; **TAO HUANG** ; **JIAQI QIN** ; **WENTAO JIANG**. Superimposed components-based distance protection of lines emanating from DFIG-based wind farms. *Electric Power Systems Research*, 2022, vol. 208, ISSN 0378-7796, 107916

- **A. ALRASHDAN** ; **E. A. FEILAT** ; **M. A. HAJ-AHMED**. Protection of Transmission Lines Emanating from DFIG-Based Wind Farms During Symmetrical Faults. *IEEE Industry Applications Society Annual Meeting (IAS), Vancouver, BC, Canada*, 2021, 1-6

- The impacts of series compensated EHV lines on distance protection, and a proposed new mitigation solution. *Degree Project in Electrotechnical Theory and Design, KTH Royal Institute of Technology*, 2017